# NEUE EUROPÄISCHE PATENTSCHRIFT

(11) **EP 2 031 723 B3**
(45) Veröffentlichungstag dieser Patentschrift: **25.09.2013**
(45) Hinweis auf die Patenterteilung: 09.02.2011
(21) Anmeldenummer: 08014559.2
(22) Anmeldetag: 15.08.2008
(51) Int. Cl.: H02G 3/20, F21V 21/04

(54) **Abstandshalter für den Einbau in einer Leichtbauplatte**
Distancer for installation in a lightweight construction sheet
Espaceur pour l'intégration dans un panneau de construction léger

(30) Priorität: 29.08.2007 DE 202007012109 U; 29.08.2007 DE 202007012107 U; 29.08.2007 DE 202007012108 U
(43) Veröffentlichungstag der Anmeldung: 04.03.2009
(73) Patentinhaber: Elprothom GmbH & Co. KG, 49377 Vechta (DE)
(72) Erfinder: Hentschel, Thomas, 08451 Crimmitschau (DE); Middelbeck, Olaf, 49377 Vechta (DE)
(74) Vertreter: Heuer, Wilhelm

(56) Entgegenhaltungen:
- DE-C2- 4 324 057
- FR-A- 2 620 515

## Beschreibung

Die vorliegende Erfindung betrifft einen Abstandshalter, insbesondere für den Einbau elektrischer und/oder Hitze abgebender Komponenten an einer Leichtbauplatte. Insbesondere wenn eine derartige Platte als Deckenverkleidung eingesetzt und mit Dämmmaterial hinterlegt ist, tritt das Problem auf, dass Hitze erzeugende elektrische Komponenten, die an der Leichtbauplatte montiert werden sollen, zuverlässig von dem Dämmmaterial ferngehalten werden müssen, um Brandgefahr zu vermeiden.

Aus DE 43 240 57 C2 ist ein Abstandshalter mit einem Rückenschild und zwei davon abstehenden Beinen bekannt, der vorgesehen ist, um mit dem Rückenschild voran in eine Öffnung einer Platte eingeschoben zu werden, wobei die beiden Beine den Rückenschild an der Platte mit Hilfe von an einer Innenseite der Platte anliegenden Auflageflächen abstützen.

Bei diesem bekannten Abstandshalter sind die von dem Rückenschild abgewandten Enden der zwei Beine durch einen Ring verbunden, der vorgesehen ist, um in die Öffnung der Platte eingefügt zu werden, wobei ein umlaufender Flansch des Rings der Rand der Öffnung an einer Vorderseite der Platte verdeckt und die an der Rückseite der Platte zur Anlage kommenden Auflageflächen mit Hilfe von Schrauben fest gespannt werden, um die Platte zwischen den Auflageflächen und dem Flansch einzuklemmen.

Ein Problem dieser Konstruktion ist, dass der Ring genau an die Abmessungen der Öffnung der Platte angepasst sein muss, in der der Abstandshalter montiert werden soll. Für Öffnungen in unterschiedlichen Abmessungen werden daher zahlreiche verschiedene Modelle des Abstandshalters benötigt, was die Herstellung verteuert und die Benutzung für einen Handwerker beschwerlich macht, da die verschiedenen Modelle des Abstandshalters bereit gehalten und für jede Anwendung das jeweils passende ausgesucht werden muss. Auch die Notwendigkeit des Festschraubens macht die Anwendung dieses bekannten Abstandhalters langwierig.

Ein anderer Typ von Abstandshalter ist aus DE 103 35 515 A1 bekannt. Dieser besteht aus zwei drehbar miteinander verbundenen, U-förmig gekrümmten Streifen, wobei jeder Streifen als bestehend aus einem Rükkenschild und zwei davon in eine gleiche Richtung abstehenden Beinen aufgefasstwerden kann und die drehbare Verbindung zwischen den Streifen sich jeweils an deren Rückenschild befindet. Die freien Enden der Arme sind bei diesem Abstandshalter unverbunden, was es ermöglicht, den Abstandshalter durch Wandöffnungen hindurch zu schieben, deren lichte Weite wesentlich kleiner ist als der Abstand der Enden der Beine im entspannten Zustand. Da jedoch der Abstandshalter nach Passieren der Öffnung nicht lagefixiert ist, kann nicht ausgeschlossen werden, dass er so verrutscht, dass dennoch das Dämmmaterial an der Innenseite der Wand einer in der Öffnung montierten Wärmequelle kritisch nahe kommt.

Aufgabe der Erfindung ist, einen Abstandshalter zu schaffen, der die oben erwähnten Nachteile des Stands der Technik vermeidet.

Die Aufgabe der Erfindung wird gelöst, indem bei einem Abstandshalter mit wenigstens zwei von einem Rückenschild in eine gleiche Richtung abstehenden Beinen, wobei von jedem Bein wenigstens eine Auflagefläche radial nach außen absteht, jedes Bein in einem Bereich zwischen seinem von dem Rückenschild abgewandten Ende und der Auflagefläche wenigstens eine Sollbruchstelle aufweist. Dies erlaubt es, die betreffenden Bereiche der Beine deutlich länger zu machen als die Stärke einer Platte, an der der Abstandshalter montiert werden soll, so dass ein Benutzer die Enden der Beine während des Platzierens des Abstandshalters ständig in der Hand behalten und exakt führen kann. Dank der Sollbruchstellen können die nach dem Platzieren des Abstandshalters über die Außenseite der Platte überstehenden Enden der Beine bequem entfernt werden.

Die Aufgabe der Erfindung wird des Weiteren gelöst, indem bei einem Abstandshalter mit wenigstens zwei von einem Rückenschild in eine gleiche Richtung abstehenden Beinen, wobei von jedem Bein wenigstens eine Auflagefläche radial nach außen absteht, die Beine an ihren vom Rückenschild abgewandten Enden unverbunden sind. So kann der Abstandshalter an Öffnungen mit unterschiedlichen Durchmessern eingesetzt werden, so dass eine kleine Zahl von Modellen in unterschiedlicher Größe oder gar nur ein einziges Modell des Abstandshalters für die meisten praktischen Anwendungen ausreicht.

Die Aufgabe der Erfindung wird des Weiteren gelöst, indem bei einem Abstandshalter mit wenigstens zwei von einem Rückenschild in eine gleiche Richtung abstehenden Beinen und Auflageflächen, die von den Beinen im Abstand von deren von dem Rückenschild abgewandten Enden abstehen, die Auflageflächen vorzugsweise einteilig mit den Beinen ausgebildet sind. Diese Vereinfachung des Aufbaus des Abstandhalters ist möglich und praktisch anwendbar, da davon ausgegangen werden kann, dass der Abstandhalter nach dem Einführen in eine Öffnung durch das Gewicht von auf ihm ruhenden Isolationsmaterial am Platz gehalten wird. Indem die Auflageflächen von den Beinen im Abstand von deren von dem Rückenschild abgewandten Enden abstehen, bleibt nach dem Einführen des Abstandshalters in eine Öffnung jeweils ein Abschnitt der Beine in der Öffnung zurück, wodurch ein Verrutschen des Abstandshalters ausgeschlossen ist.

Eine Lösung der Aufgabe liegt weiterhin darin, an jedes Bein in einem Bereich zwischen seinem von dem Rückenschild abgewandten Ende und der Auflagefläche wenigstens einen radial nach außen gerichteten Dorn vorzusehen. Ein solcher Dorn kann in eine Platte aus geeignetem Material nach Platzieren der Auflageflächen an der Innenseite einer Öffnung der Platte eingedrückt werden, um eine formschlüssige Verankerung des Abstandshalters an der Platte unabhängig von deren Dicke zu erreichen.

Zur Erleichterung des Einbaus eines elektrischen Verbrauchers wie etwa einer Leuchte in der Plattenöffnung nach Anbringung des Abstandshalters kann ein Klemmstein mit elektrischen Kontakten zur Versorgung des Verbrauchers auf einen Haltestift des Abstandshalters aufgesteckt sein. So ist es möglich, die elektrischen Kontakte an dem Klemmstein vor Anbringung des Abstandshalters an der Platte vorzumontieren und dann den Abstandshaltermitsamt des vormontierten Klemmsteins an der Öffnung der Platte zu fixieren.

Um einen schnellen Zusammenbau zu ermöglichen, ist der Klemmstein an dem Haltestift vorzugsweise reibschlüssig gehalten.

Um an der Innenseite der Platte Isolationsmaterial oder dergleichen sicher vom Einbauort des elektrischen Verbrauchers fern zu halten, ist es vorteilhaft, wenn der Rückenschild breiter als die davon abstehenden Beine ist.

Um eine hohe Tragfähigkeit und Steifigkeit des Rückenschilds zu gewährleisten, ist dieser zweckmäßigerweise in zwei zueinander senkrechten und zu der besagten gleichen Richtung parallelen Schnittebenen gewölbt.

Auch die Beine sind zweckmäßigerweise in einem Schnitt quer zu der besagten gleichen Richtung kreisbogenförmig gewölbt, um eine hohe Biegesteifigkeit bei geringer Materialstärke zu erzielen.

Die Auflageflächen sind zweckmäßigerweise über die sie tragenden Beine hinaus seitlich verbreitert, um eine hohe Standfestigkeit zu gewährleisten, insbesondere, wenn die Zahl der Beine lediglich zwei ist.

DerAbstandshalterkannauseinemthermoplastischen Polymermaterial wie etwa Polyamid einteilig geformt sein. Das Polymermaterial ist zweckmäßigerweise mit einem flammhemmenden Zuschlag versetzt, und es kann durch Fasern, insbesondere Glasfasern verstärkt sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines erfindungsgemäßen Abstandshalters; und
- Fig. 2: einen Schnitt durch den Abstandshalter, montiert an einer Deckenplatte.

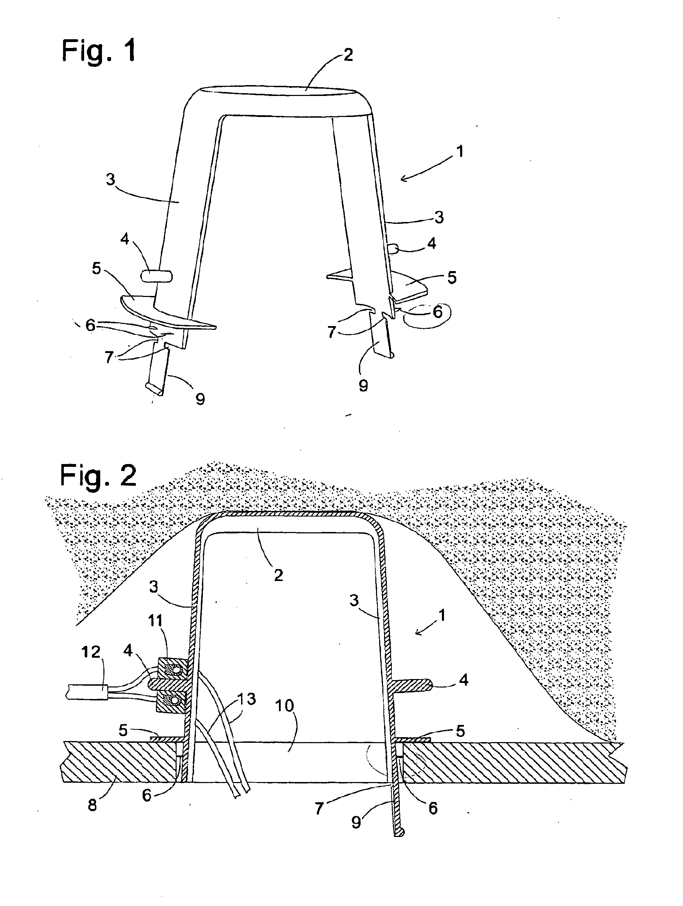

Fig. 1 zeigt eine perspektivische Ansicht des erfindungsgemäßen Abstandshalters 1. Der Abstandshalter 1 ist einteilig aus glasfaserverstärktem, flammhemmendem Polyamid spritzgeformt. Er umfasst einen kreisrunden Rückenschild 2 in Form einerflachen Schale, deren konkave Seite in der bevorzugten Einbaulage des Abstandshalters 1, wie in den Figuren gezeigt, nach unten gewandt ist. In Verlängerung der Ränder des Rükkenschildes 2 erstrecken sich zwei Beine 3 schräg auseinander laufend nach unten. Die Breite der im Querschnitt kreisbogenförmigen Beine 3 beträgt etwa ein Drittel des Durchmessers des Rückenschildes 2. Von ihrer Wurzel am Rückenschild 2 bis zu ihrem von dem Rükkenschild 2 abgewandten Ende weisen die Beine 3 jeweils der Reihe nach auf: einen radial nach außen abstehenden zylindrischen Zapfen 4 mit stumpfer, abgerundeter Spitze, eine in etwa rechtwinklig zur Längsrichtung der Beine 3 nach außen abstehende Lasche 5, deren Breite kleiner als der Durchmesser des Rückenschilds 2, aber deutlich größer als die Breite der Beine 3 ist, zwei schmale spitze Dorne 6 sowie eine Sollbruchstelle 7.

Der Abstandshalter 1 ist vorgesehen, um in einer Öffnung einer Platte 8, wie in Fig. 2 gezeigt, montiert zu werden, indem ein Benutzer die zwei jenseits der Sollbruchstellen 7 liegenden Endabschnitte 9 der Beine 3 mit den Fingern gegeneinander drücken, so dass die beiden Laschen 5 im Wesentlichen nicht über den Umfang des Rückenschildes 2 überstehen. So kann der Abstandshalter 1 in eine Öffnung 10 der Platte 8 eingeschoben werden, sofern deren Durchmesser wenigstens so groß ist wie der des Rückenschildes 2.

Vor dem Einschieben des Abstandshalters 1 in die Öffnung 10 der Platte 8 wird jeweils auf einen der zwei Dorne 6 ein Klemmstein 11 aufgesteckt, an dem Versorgungskabel 12, 13 einer in der Wandöffnung nach dem Abstandshalter 1 zu montierenden Halogenleuchte befestigt sind.

Die Platte 8 besteht vorzugsweise aus Gipskarton, einem Hartschaum oder einem anderen Leichtbaumaterial und bildet die Sichtseite einer Deckenkonstruktion, die in ihrem Inneren eine Dämmstofflage 14 enthält. Eine lose aufliegende Folie 15 trennt die Dämmstofflage 14 von der Platte 8. Die Folie 15 liegt auf dem Rückenschild 2 des Abstandshalters 1 auf. Das Gewicht der durch den Abstandshalter 1 unterstützen Dämmstofflage 14 überträgt sich über die Laschen 5 auf die Platte 8. Der Abstandshalter 1 ist an der Platte 8 formschlüssig verankert, indem die Dorne 6 von innen gegen den Rand der Öffnung 10 gedrückt sind. Der Abstand zwischen der Lasche 5 und der Sollbruchstelle 7 an jedem Bein 3 entspricht der Stärke der Platte 8, so dass, wenn der Benutzer nach Platzieren des Abstandshalters 1 die Endabschnitte 9 der Beine 3 abbricht, wie am linken Bein 3 in Fig. 2 gezeigt, der Abstandshalter 1 nicht mehr über die Außenseite der Platte 14 übersteht. So ist sichergestellt, dass das Vorhandensein des Abstandshalters 1 die M ontage einer Halogenleuchte in der Öffnung 10 nicht behindert, deren Gehäuse einen den Rand der Öffnung 10 überdeckenden Flansch aufweist.

Die Dornen 6 sind flach und im Vergleich zu den Laschen 5 dünnwandig, einerseits um das Eindrükken der Dornen 6 in eine Platte aus Gipskarton oder einem anderen nachgiebigen Leichtbaumaterial zu erleichtern, zum anderen, um dem Benutzer die Möglichkeit zu geben, vor der Platzierung des Abstandshalters 1 die Dornen 6 mit einem Messer abzuschneiden, wenn die Platte 8, in der der Abstandshalter 1 montiert werden soll, zu hart ist, um die Dornen 6 darin einzudrücken.

Diverse nicht in Figuren dargestellte Abwandlungen der Erfindung sind möglich. So können beispielsweise mehr als zwei Beine 3 gleichmäßig am Umfang des Rückenschildes 2 verteilt sein, es können mehrere Sollbruchstellen 7 nacheinander an den Beinen 3 vorgesehen sein, um die Endabschnitte 9 jeweils passend zur Stärke der Platte 8, in der der Abstandshalter 1 montiert ist, abbrechen zu können, oder die Zapfen 4 können mit Widerhaken und eventuell einem Längsschlitz versehen sein, um den Klemmstein 11 formschlüssig daran zu verankern.

## Patentansprüche

1. Abstandshalter (1) mit wenigstens zwei von einem Rückenschild (2) in eine gleiche Richtung abstehenden Beinen (3), wobei von jedem Bein (3) wenigstens eine Auflagefläche (5) radial nach außen absteht, **dadurch gekennzeichnet, dass** jedes Bein (3) in einem Bereich zwischen seinem von dem Rückenschild abgewandten Ende (9) und der Auflagefläche (5) wenigstens eine Sollbruchstelle (7) aufweist.

2. Abstandshalter (1) nach Anspruch 1, **dadurch gekennzeichnet, dass** die von dem Rückenschild (2) abgewandten Enden (9) der Beine (3) unverbunden sind

3. Abstandshalter (1) nach Anspruch 1, **dadurch gekennzeichnet, dass** die von dem Rückenschild (2) abgewandten Enden (9) der Beine (3) unverbunden und die Auflageflächen (5) einteilig mit den Beinen (3) ausgebildet sind.

4. Abstandshalter (1) nach einem der vorhergehenden Ansprüche, **dadurch gekennzeichnet, dass** jedes Bein (3) in einem Bereich zwischen seinem von dem Rückenschild (2) abgewandten Ende (9) und der Auflagefläche (5) wenigstens einen radial nach außen gerichteten Dorn (6) trägt.

5. Abstandshalter nach einem der vorhergehenden Ansprüche, -**dadurch gekennzeichnet, dass** ein Klemmstein (11) auf einen Haltestift (4) des Abstandshalters aufgesteckt ist.

6. Abstandshalter nach Anspruch 5, **dadurch gekennzeichnet, dass** der Klemmstein (11) an dem Haltestift (4) reibschlüssig gehalten ist.

7. Abstandshalter nach einem der vorhergehenden Ansprüche, **dadurch gekennzeichnet, dass** der Rückenschild (2) breiter als die davon abstehenden Beine (3) ist.

8. Abstandshalter nach einem der vorhergehenden Ansprüche, **dadurch gekennzeichnet, dass** der Rückenschild (2) in zwei zueinander senkrechten und zu der besagten gleichen Richtung parallelen Schnittebenen gewölbt ist.

9. Abstandshalter nach einem der vorhergehenden Ansprüche, **dadurch gekennzeichnet, dass** die Beine (3) in einem Schnitt quer zu der besagten gleichen Richtung kreisbogenförmig sind.

10. Abstandshalter nach einem der vorhergehenden Ansprüche, **dadurch gekennzeichnet, dass** die Beine (3) zwei an der Zahl sind.

11. Abstandshalter nach einem der vorhergehenden Ansprüche, **dadurch gekennzeichnet, dass** die Auflageflächen (5) über die sie tragenden Beine (3) seitlich hinausragen.

12. Abstandshalter (1) nach einem der vorhergehenden Ansprüche, **dadurch gekennzeichnet, dass** er aus einem thermoplastischen Polymermaterial einteilig geformt ist.

13. Abstandshalter nach Anspruch 12, **dadurch gekennzeichnet, dass** das Polymermaterial mit einem flammhemmenden Zuschlag versetzt ist.

14. Abstandshalter nach Anspruch 12 oder 13, **dadurch gekennzeichnet, dass** das Polymermaterial faserverstärkt ist.

## Claims

1. A spacer (1) with at least two legs (3) protruding from a dorsal shield (2) in a same direction, wherein at least one supporting surface (5) protrudes from each leg (3) in a radially outward direction, **characterized in that**, in an area between its end (9) facing away from the dorsal shield and the supporting surface (5), each leg (3) has at least one predetermined breaking point (7).

2. The spacer (1) according to Claim 1, **characterized in that** the ends (9) of the legs (3), which are facing away from the dorsal shield (2), are not connected.

3. A spacer (1) according to Claim 1, **characterized in that** the ends (9) of the legs (3), which are facing away from the dorsal shield (2), are not connected and the supporting surfaces (5) are formed integrally with the legs (3).

4. A spacer (1) according to any one of the preceding claims, **characterized in that**, in an area between its end (9) facing away from the dorsal shield (2) and the supporting surface (5), each leg (3) carries at least one spike (6) that is directed outwards in a radial direction.

5. The spacer according to any one of the preceding claims, **characterized in that** a clamping piece (11) is fitted onto a retaining pin (4) of the spacer.

6. The spacer according to Claim 5, **characterized in that** the clamping piece (11) is retained on the retaining pin (4) in a frictional manner.

7. The spacer according to any one of the preceding claims, **characterized in that** the dorsal shield (2) is wider than the legs (3) protruding therefrom.

8. The spacer according to any one of the preceding claims, **characterized in that** the dorsal shield (2) is arched in two section planes that are perpendicular to each other and parallel to said same direction.

9. The spacer according to any one of the preceding claims, **characterized in that** the legs (3) have the shape of a circular arch in a section extending transversely to said same direction.

10. The spacer according to any one of the preceding claims, **characterized in that** the legs (3) are two in number.

11. The spacer according to any one of the preceding claims, **characterized in that** the supporting surfaces (5) project laterally beyond the legs (3) carrying them.

12. The spacer (1) according to any one of the preceding claims, **characterized in that** it is formed in one part from a thermoplastic polymer material.

13. The spacer according to Claim 12, **characterized in that** a flame-retardant aggregate is added to the polymer material.

14. The spacer according to Claim 12 or 13, **characterized in that** the polymer material is fiber-reinforced.

## Revendications

1. Ecarteur (1) comprenant au moins deux jambes (3) dépassant d'un panneau dorsal (2) dans une direction identique, dans lequel au moins une surface d'appui (5) dépasse radialement vers l'extérieur de chaque jambe (3), **caractérisé en ce que** chaque jambe (3) présente au moins un point destiné à la rupture (7) dans une zone entre son extrémité (9) détournée du panneau dorsal et la surface d'appui (5).

2. Ecarteur (1) selon la revendication 1, **caractérisé en ce que** les extrémités (9) des jambes (3) détournées du panneau dorsal (2) sont déconnectées.

3. Ecarteur (1) selon la revendication 1, **caractérisé en ce que** les extrémités (9) des jambes (3) détournées du panneau dorsal (2) sont déconnectées et les surfaces d'appui (5) sont réalisées d'une pièce avec les jambes (3).

4. Ecarteur (1) selon l'une quelconque des revendications précédentes, **caractérisé en ce que** chaque jambe (3) porte au moins une broche (6) orientée radialement vers l'extérieur dans une zone entre son extrémité (9) détournée du panneau dorsal (2) et la surface d'appui (5).

5. Ecarteur selon l'une quelconque des revendications précédentes, **caractérisé en ce qu'**un coulisseau de serrage (11) est enfiché sur une goupille de fixation (4) de l'écarteur.

6. Ecarteur selon la revendication 5, **caractérisé en ce que** le coulisseau de serrage (11) est maintenu par friction sur la goupille de fixation (4).

7. Ecarteur selon l'une quelconque des revendications précédentes, **caractérisé en ce que** le panneau dorsal (2) est plus large que les jambes (3) dépassant de celui-ci.

8. Ecarteur selon l'une quelconque des revendications précédentes, **caractérisé en ce que** le panneau dorsal (2) est bombé dans deux plans de coupe perpendiculaires l'un à l'autre et parallèles à ladite direction identique.

9. Ecarteur selon l'une quelconque des revendications précédentes, **caractérisé en ce que** les jambes (3) sont en forme d'arc de cercle dans une coupe transversale à ladite direction identique.

10. Ecarteur selon l'une quelconque des revendications précédentes, **caractérisé en ce que** les jambes (3) sont au nombre de deux.

11. Ecarteur selon l'une quelconque des revendications précédentes, **caractérisé en ce que** les surfaces d'appui (5) dépassent latéralement au-delà des jambes (3) les portant.

12. Ecarteur (1) selon l'une quelconque des revendications précédentes, **caractérisé en ce qu'**il est moulé d'une pièce à partir d'un matériau polymère thermoplastique.

13. Ecarteur selon la revendication 12, **caractérisé en ce que** le matériau polymère est mélangé à un additif retardateur de combustion.

14. Ecarteur selon la revendication 12 ou 13, **caractérisé en ce que** le matériau polymère est renforcé de fibres.
